# EUROPÄISCHE PATENTSCHRIFT

(11) **EP 3 348 499 B1**
(45) Veröffentlichungstag und Bekanntmachung des Hinweises auf die Patenterteilung: **17.11.2021**
(21) Anmeldenummer: 17151386.4
(22) Anmeldetag: 13.01.2017
(51) Int. Cl.: B65G 47/51

(54) **FÖRDEREINRICHTUNG ZUR BILDUNG EINES DURCHGANGS IN EINER STÜCKGUTFÖRDERANLAGE, INSBESONDERE EINER WERKSTÜCKFÖRDERANLAGE**
CONVEYOR APPARATUS FOR FORMING A PASSAGE IN A PIECE GOOD CONVEYOR SYSTEM, IN PARTICULAR A MATERIAL CONVEYOR SYSTEM
DISPOSITIF DE TRANSPORT DESTINÉ À FORMER UN PASSAGE DANS UNE INSTALLATION DE TRANSPORT DE MARCHANDISE DE DÉTAIL, EN PARTICULIER UNE INSTALLATION DE TRANSPORT DE PIÈCES

(43) Veröffentlichungstag der Anmeldung: 18.07.2018
(73) Patentinhaber: WEKAL Maschinenbau GmbH, 34560 Fritzlar (DE)
(72) Erfinder: DEGENHARDT, Klaus, 34308 Bad Emstal (DE)
(74) Vertreter: Patentanwälte Walther Hinz Bayer PartGmbB

(56) Entgegenhaltungen:
- DE-A1- 2 603 165
- DE-A1- 3 733 510
- FR-A1- 2 157 997
- JP-A- S5 059 983
- US-A- 1 837 605

## Beschreibung

Die vorliegende Erfindung betrifft eine Fördereinrichtung mit einer Stückgutförderanlage, insbesondere einer Werkstückförderanlage.

Stückgutförderanlagen, und insbesondere auch Werkstückförderanlagen sind aus dem Stand der Technik bekannt. Werkstückförderanlagen dienen dem Transport von Werkstücken zu einzelnen Stationen, bei denen das Werkstück weiter verarbeitet oder weiter bearbeitet wird. Derartige Werkstückförderanlagen sind üblicherweise auf dem Boden einer Fabrikhalle angeordnet und erstrecken sich zwischen mehreren Bearbeitungsstationen. Das heißt, die Werkstückförderanlage ist im Wesentlichen horizontal auf dem Boden einer Fabrikhalle mehrere Arbeitsstationen verbindend in etwa Hüfthöhe angeordnet.

Neuere Arbeitsschutzrichtlinien besagen, dass die in einer Fabrikhalle tätigen Arbeiter in einer bestimmten Zeit bei Vorliegen einer Gefahrenlage die Fabrikhalle verlassen können müssen. In einer Fabrikhalle bei der eine solche Stückgutförderanlage, und hier insbesondere eine Werkstückförderanlage, aufgebaut ist, ist die Möglichkeit für die Personen, die in der Halle beschäftigt sind, den kürzesten Fluchtweg zu gehen, stark eingeschränkt. Um die Fluchtwege abzukürzen, das heißt in der Halle beschäftigten Personen das Verlassen der Halle bei Gefahr zu erleichtern, ist man dazu übergegangen, über die Stückgutförderanlage Brücken zu bauen. Dies ist einerseits aufwendig, und führt auch nicht notwendiger Weise dazu, dass sich die Fluchtwege in Bezug auf die Dauer zum Verlassen der Halle wesentlich verkürzen. Dies ist im Wesentlichen dadurch bedingt, dass die Personen Stufen steigen müssen.

Darüber hinaus ist bekannt, Stückgutförderanlagen als Deckenförderanlagen auszubilden. Das heißt, dass die Förderanlagen von der Hallendecke abgesetzt an der Hallendecke angeordnet sind. Auch diese Variante ist konstruktiv aufwendig, insbesondere auch deshalb, weil unterhalb der gesamten Förderanlage eine Auffangvorrichtung verlaufen muss, die dafür sorgt, dass wenn sich beispielsweise Stückgutträger oder Stückgüter von der Stückgutförderanlage lösen, diese nicht auf den Boden fallen können und hierbei Personen verletzen.

Die DE 37 33 510 A1 zeigt eine Portalförderanlage mit vor- und nachgelagerter Transportbahn für Textilspulen. Die Textilspulen werden von an der Portalförderanlage angeordneten umlaufenden Trägern von vorgelagerten Transportbahnen aufgenommen und am gegenüberliegenden Ende der Portalförderanlage auf der nachgelagerten Transportbahn abgesetzt.

Aus der FR 2 157 997 A1 ist eine Portalförderanlage zwischen zwei Bearbeitungsmaschinen gemäß dem Oberbegriff des Anspruchs 1 bekannt. Der Transport von Werkstücken erfolgt hierbei über am Portal der Portalförderanlage angeordnete umlaufende Mitnehmer. Durch den Mitnehmer wird das Werkstück in einer beliebigen Position transportiert.

Die Aufgabe besteht in der Weiterentwicklung des nächstliegenden Standes der Technik gemäß der FR 2 157 997 A1.

Der Weiterentwicklung dienen die Merkmale des Anspruchs 1. Hierbei weist die Fördereinrichtung zur Bildung eines Durchgangs mindestens eine Portalfördereinrichtung auf, wobei die Portalfördereinrichtung in der Ansicht in etwa U-förmig mit zwei vertikalen Portalschenkeln und einem die Portalschenkel verbindenden Portalsteg ausgebildet ist. Hierbei ist die Stückgutförderanlage zum Transport von Stückgütern ausgebildet und weist auf mindestens einer Transportbahn eine Mehrzahl von Stückgutträgern auf, wobei der Portalfördereinrichtung zu jeder Seite eine Transportbahn zugeordnet ist, wobei auf der Transportbahn die Stückgüter von einer Arbeitsstation zur nächsten Arbeitsstation transportiert werden. Hierbei weist die Portalfördereinrichtung ein umlaufendes Transportmittel aufweist, wobei das Transportmittel pendelnd daran angeordnete Transportgondeln aufweist, die der Aufnahme von Werkstückträgern im Bereich der Portalschenkel der Portalfördereinrichtung in der Höhe der jeweiligen Transportbahn der Werkstückförderanlage dienen. Die Transportgondel weist einen Aufnahmeschenkel auf, der Aufnahmemittel zum formschlüssigen Erfassen eines Stückgutträgers aufweist, wobei die Aufnahmemittel beispielsweise zwei nebeneinander angeordnete Stifte sind, die in entsprechende Bohrungen auf der Unterseite des Stückgutträgers eingreifen. An den Portalschenkeln sind im Bereich der Führungsbahn Führungsleisten vorgesehen, durch die ein unbeabsichtigtes Pendeln bei der Übernahme der Stückgutträger von der Transportbahn verhindert wird, und somit die Stifte der Transportgondel in die Bohrungen des Stückgutträgers eingreifen können

So ist vorgesehen, dass die Stückgutförderanlage zum Transport von Stückgütern, die insbesondere als Horizontalförderanlage ausgebildet ist, auf mindestens einer Transportbahn eine Mehrzahl von Stückgutträgern aufweist. Hieraus wird deutlich, dass einer Portalfördereinrichtung zu jeder Seite eine Transportbahn zugeordnet ist, wobei auf der Transportbahn die Stückgutträger von einer Arbeitsstation zur nächsten Arbeitsstation transportiert werden. Eine bestehende Stückgutförderanlage ist insofern auch mit einer Portalfördereinrichtung nachrüstbar; erforderlichenfalls ist zum Einbau der Portalfördereinrichtung die Transportbahn entsprechend der Größe der Portalfördereinrichtung auszusparen.

Die Portalfördereinrichtung ist in der Ansicht in etwa U-förmig ausgebildet, mit zwei vertikalen Portalschenkeln und einem die Portalschenkel verbindenden, im Wesentlichen horizontal verlaufenden Portalsteg. Das heißt, mit einer derartigen Portalfördereinrichtung werden Stückgüter zunächst vertikal entlang des einen ersten Portalschenkels nach oben verfahren, dann entlang dem horizontal ausgerichteten Portalsteg und über den zweiten vertikal verlaufenen Portalschenkel nach unten, um dann wieder der entsprechenden Transportbahn übergeben zu werden. Eine besonders vorteilhafte Ausführung einer Stückgutförderanlage zeichnet sich durch mindestens zwei nebeneinander angebrachte Transportbahnen zum Transport einer Mehrzahl von Stückgutträgern auf. Hierbei sind die mindestens zwei Transportbahnen im Bereich der Portalschenkel zu einem möglichen Umlauf der Werkstückträger vorteilhaft miteinander verbunden; jeder Transportbahn ist vorteilhaft eine Portalfördereinrichtung zugeordnet. Insofern sind bei entsprechender Anordnung der Transportbahnen zwei parallel zueinander angeordnete Portalfördereinrichtungen vorgesehen. Hierdurch wird die Möglichkeit eröffnet den Transport der Werkstückträger in zwei entgegengesetzten Förderrichtungen zu verwirklichen.

Nach einem weiteren, besonderen Merkmal der Erfindung ist vorgesehen, dass die Portalfördereinrichtung als Umlauffördereinrichtung ausgebildet ist. Hierzu weist die Portalfördereinrichtung vorteilhaft ein umlaufendes Transportmittel auf, wobei das Transportmittel die pendelnd daran angeordnete Transportgondeln aufweist. Hieraus wird deutlich, dass bei einer Portalfördereinrichtung in einer Richtung die Transportgondeln beispielsweise mit Stückgutträgern bestückt sind, auf denen Stückgüter insbesondere Werkstücke lagern, und in die andere Richtung die Transportgondeln leer zurückgefördert werden.

Das Transportmittel selbst ist im Bereich des Übergangs von den Portalschenkeln zu dem Portalsteg durch Umlenkglieder umgelenkt. Wenn das Transportmittel als Kette, und hier insbesondere als Rollenkette ausgebildet ist, sind die Umlenkglieder vorteilhaft als Zahnräder ausgebildet, um ein formschlüssiges Erfassen der Rollenkette durch die Zahnräder zu ermöglichen. Insbesondere vorteilhaft an der Verwendung einer Rollenkette mit Zahnrädern als Umlenk- und Antriebsmittel ist, dass hierbei kein Schlupf auftritt. Auch ein Zahnriemenantrieb ist schlupffrei und insofern ebenfalls einsetzbar.

Eine Transportgondel zur Anordnung an einem Transportmittel zeichnet sich durch eine in der Seitenansicht L-förmige Gestalt aus, die insofern einen Pendelschenkel und einen Aufnahmeschenkel aufweist. Mit dem Pendelschenkel ist die Transportgondel an dem Transportmittel insbesondere der Rollenkette, pendelnd aufgehängt. Durch die pendelnde Anlenkung der Transportgondel an das Transportmittel wird erreicht, dass die Gondel immer in vertikal ausgerichteter Position verbleibt. Um zu gewährleisten, dass der Aufnahmeschenkel den Stückgutträger oder Werkstückträger bzw. das Stückgut sicher aufnehmen kann, weist der Aufnahmeschenkel Aufnahmemittel zum formflüssigen Erfassen des Stückgutträgers und hier insbesondere eines Werkstückträgers auf. Die Aufnahmemittel können hierbei beispielsweise zwei nebeneinander angeordnete Stifte sein, die in entsprechende Bohrungen auf der Unterseite des Werkstückträgers eingreifen.

Die Transportbahn weist als ein weiteres Merkmal der Erfindung zum Durchlass der Transportgondel eine entsprechende Aussparung auf. Derartige Aussparungen befinden sich naturgemäß im Bereich der Portalschenkel, wobei die Transportgondeln durch beispielsweise die Rollenkette entlang dem Portalschenkel geführt sind. Um zu gewährleisen, dass durch die jeweilige Transportgondel der Stückgutträger tatsächlich erfasst wird, sind an den Portalschenkeln im Bereich der Transportbahn Führungsmittel, zum Beispiel Führungsleisten für die Transportgondeln vorgesehen. Der Abstand zweier Führungsleisten zur Führung der Transportgondel entspricht hierbei etwa der Breite des horizontalen Aufnahmeschenkels der Transportgondel. Das heißt, dass durch die Führungsmittel ein unbeabsichtigtes Pendeln bei der Übernahme des Stückgutträgers verhindert von der Transportbahn wird, und somit die Stifte der Transportgondel in die Bohrungen des Stückgutträgers eingreifen können.

Anhand der Zeichnungen wird die Erfindung anhand einer Werkstückförderanlage nachstehend beispielhaft näher erläutert.
- Fig. 1: eine horizontal ausgerichtete Werkstückförderanlage mit zwei Transportbahnen sowie zwei in den Transportbahnen angeordneten Portalfördereinrichtungen;

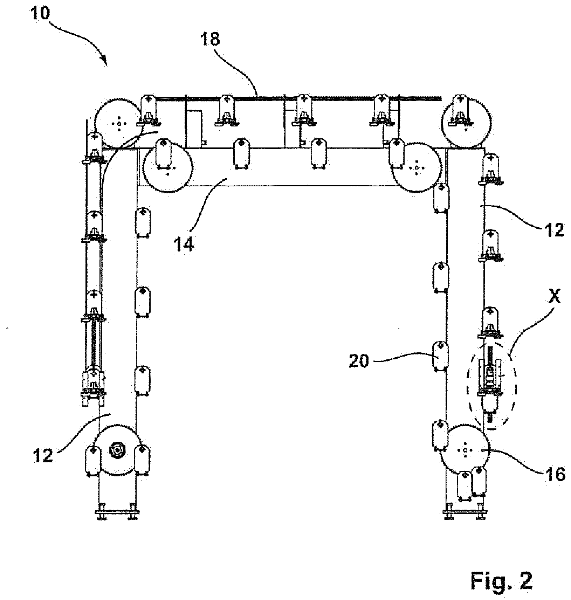

- Fig. 2: zeigt eine Portalfördereinrichtung in der Seitenansicht;

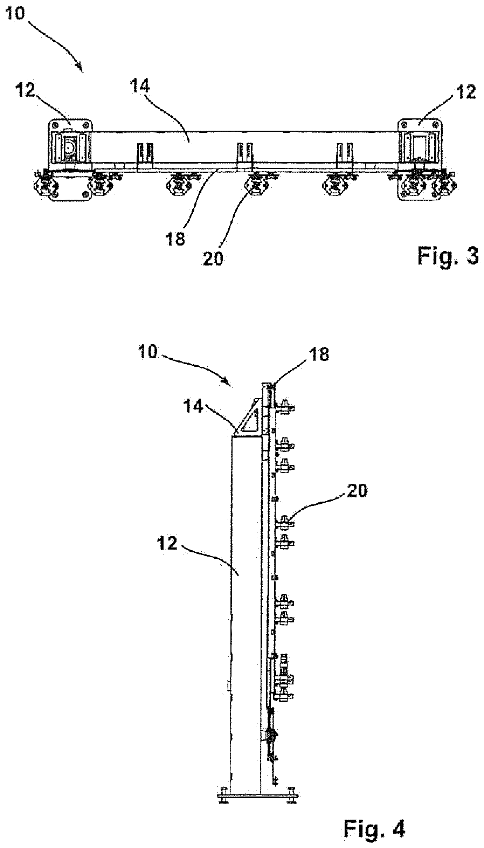

- Fig. 3: zeigt eine Ansicht auf die Portalfördereinrichtung von oben;
- Fig. 4: zeigt eine Seitenansicht der Portalfördereinrichtung gemäß Fig. 2;
- Fig. 5: zeigt die Einzelheiten X aus Fig. 2 in vergrößerter Darstellung;
- Fig. 6a: zeigt die Transportgondel in einer Frontansicht;
- Fig. 6b: zeigt die Transportgondel in einer Seitenansicht.

Die insgesamt mit 1 bezeichnete Werkstückförderanlage umfasst zwei parallel zueinander verlaufende Transportbahnen 2, wobei die beiden Transportbahnen 2 der Werkstückförderanlage 1 durch zwei Portalfördereinrichtungen 10 getrennt sind. Hierbei ist jeder Transportbahn 2 eine Portalfördereinrichtung 10 zugeordnet. Insofern sind die beiden Portalfördereinrichtungen 10 seitlich beabstandet parallel zueinander angeordnet. Eine Transportbahn 2 umfasst zwei parallel zueinander beabstandete Schienen, zwischen denen eine Mitnehmereinrichtung geführt ist, beispielsweise ein Zugmittel, das dem Transport von Werkstückträgern dient, auf denen Werkstücke gelagert sind.

Eine jede Portalfördereinrichtung 10 umfasst zwei beabstandet zueinander angeordnete vertikal ausgerichtete Portalschenkel 12, die durch einen Portalsteg 14 miteinander verbunden sind. Jede Portalfördereinrichtung weist ein umlaufendes Transportmittel, insbesondere eine umlaufende Rollenkette auf, wobei zur Umlenkung und zum Antrieb der jeweiligen Rollenkette Zahnräder 16 vorgesehen sind, die in formflüssigem Eingriff mit der Rollenkette 18 stehen. Zum Antrieb jeweils eines Zahnrads 16 bei jeder Portalfördereinrichtung ist ein Antriebsmotor 17 vorgesehen. Die Rollenkette ist lediglich im Bereich des Portalsteges angedeutet, sie ist jedoch umlaufend als Endloskette ausgebildet, und ist insofern in der Lage, eine kontinuierliche Förderung von Werkstückträgern im Bereich einer Transportbahn einer Werkstückförderanlage 1 zu gewährleisten. An der Rollenkette 18 sind Transportgondeln 20 pendelnd angeordnet, wodurch gewährleistet ist, dass sich diese Transportgondeln immer vertikal ausrichten. Die Transportgondeln 20 dienen der Aufnahme von Werkstückträgern im Bereich der Portalschenkel 12 der Portalfördereinrichtung 10 in der Höhe der jeweiligen Transportbahn 2 der Werkstückförderanlage 1.

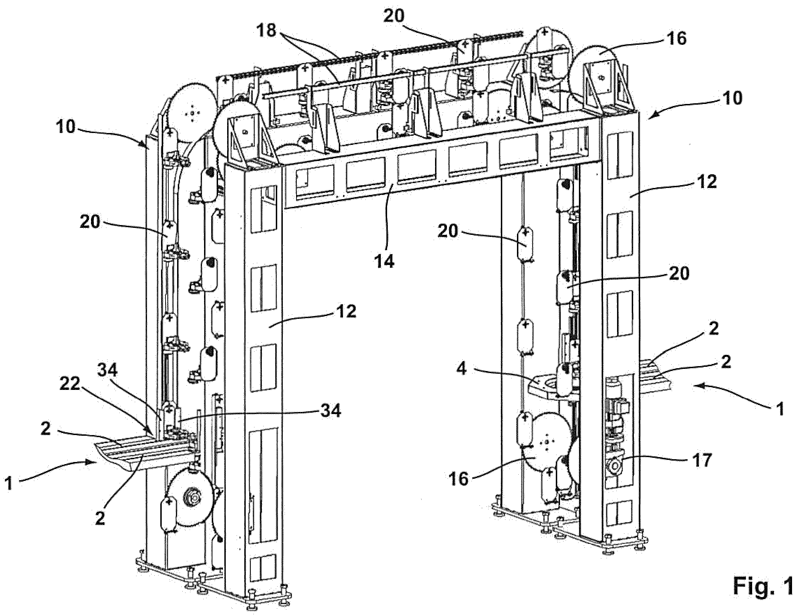

Fig. 1 zeigt, wie dies bereits erläutert worden ist, zwei parallel zueinander und seitlich beabstandet zueinander angeordnete Portalfördereinrichtungen. Der Abstand zwischen den beiden Portalfördereinrichtungen 10 entspricht hierbei in etwa der Breite der beiden Transportbahnen 2. Insofern sind die beiden Transportbahnen 2 zwischen den beiden Portalschenkeln 12 bogenförmig miteinander verbunden, so dass sich für das in den Transportbahnen angeordnete Zugmittel ein Umlauf ergibt. Das bedeutet, dass das Zugmittel ebenso umlaufend in den Transportbahnen 2 geführt ist, wie dies auch beispielsweise bei der Rollenkette 18 der Fall ist.

Es wurde bereits darauf hingewiesen, dass die Transportgondeln entlang der Portalschenkel 12 geführt werden, und zwar im Bereich des einen Portalschenkels 12 aufwärts, und im Bereich des anderen gegenüberliegenden Portalschenkels abwärts. Bei der Aufwärtsbewegung der Transportgondeln 20 sind diese in der Lage, die Stückgutträger von der jeweiligen Transportbahn 2 aufzunehmen. Auf der gegenüberliegenden Seite der Portalfördereinrichtung 10 werden diese auf der Transportbahn 2 abgesetzt. Im Bereich der Aufnahme des Werkstückträgers durch die Transportgondeln ist die Transportbahn 2 mit einer Aussparung 22 versehen. Das heißt im vorliegenden Fall ist die eine äußere Schiene der Transportbahn 2 in der Größe der Aussparung unterbrochen.

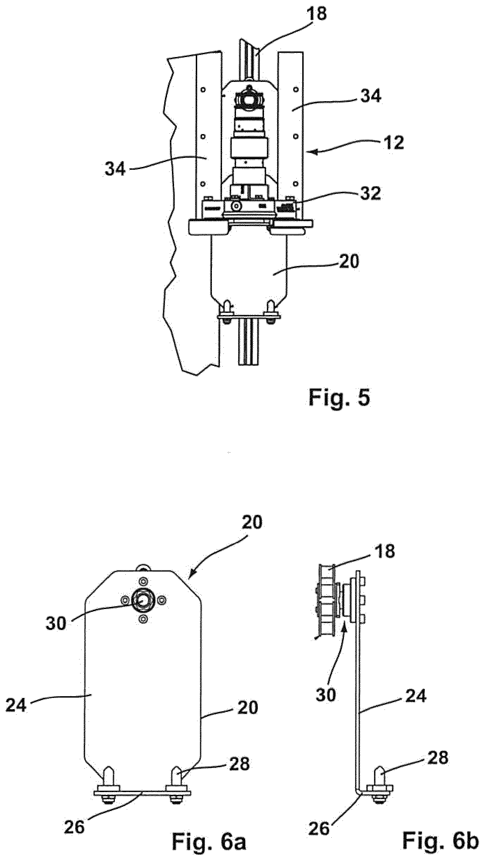

Wie sich aus den Figuren 6a und 6b, die die Ausbildung der Transportgondel 20 zeigen, entnehmen lässt, umfasst die Transportgondel 20 einen Pendelschenkel 24 und einen Aufnahmeschenkel 26, wobei der Aufnahmeschenkel 26 zwei nebeneinander und beabstandet zueinander angeordnete Stifte 28 zeigt, die in Eingriff mit entsprechenden Öffnungen (nicht dargestellt) des Werkstückträgers bringbar sind, der auf der Transportbahn 2 gefördert wird. Der Pendelschenkel 24 ist durch eine Achse 30 pendelnd an der Rollenkette 18 angelenkt.

Er wurde bereits zuvor darauf hingewiesen, dass die Transportbahn 2 im Bereich der Portalschenkel 12 eine Aussparung 22 aufweist. Die Breite der Aussparung korrespondiert mit der Breite des Aufnahmeschenkels 26 der Transportgondel, da die Transportgondel mit dem Aufnahmeschenkel 26 durch die Transportbahn und hier insbesondere durch die eine Schiene der Transportbahn hindurchtritt.

Die Transportgondeln 20 sind an der Rollenkette 18 pendelnd gelagert. Um eine Pendelbewegung bei der Übernahme des Werkstückträgers auszuschließen, weist der Portalschenkel 12 im Bereich der Übernahme des Werkstückträgers 32 von der Transportbahn seitlich angeordnete Führungsleisten 34 auf, deren Abstand in etwa die Breite des Aufnahmeschenkels 26 der Transportgondel 20 entspricht. In diesem Zusammenhang wird auf die Figur 5 verwiesen.

Es wurde bereits an anderer Stelle darauf hingewiesen, dass bei zwei parallel und beabstandet zueinander angeordneten Portalfördereinrichtungen 10 eine jede Portalfördereinrichtung den Transport in eine andere Förderrichtung ermöglicht. Insofern sind die beiden Transportbahnen 2, die parallel zueinander verlaufen zwischen den beiden Portalschenkeln unter Bildung eines Verbindungsbogens 4 miteinander verbunden. Das bedeutet, dass das in der jeweiligen Transportbahn 2 angeordnete Zugmittel (nicht dargestellt), das die Werkstückträger mitnimmt, umlaufend ausgebildet ist.

Mit der vorstehend beschriebenen Erfindung kann mit verhältnismäßig einfacher Technik insbesondere dann, wenn als Transportmittel eine Rollenkette zum Einsatz gelangt, ein kontinuierlicher Transport von Stückgütern, beispielsweise Werkstücken, ermöglicht werden. Darüber hinaus ist, da die Portalfördereinrichtung in einer Werkstückförderanlage eine gesonderte Einrichtung darstellt, die Geschwindigkeit der Rollenkette an die Geschwindigkeit des Zugmittels in der Transportbahn 2 anpassbar. Das heißt, der Durchsatz an Werkstückträgern im Bereich der Portalfördereinrichtung ist an die auf der Transportbahn ankommenden Werkstückträger anpassbar.

Um zu gewährleisten, dass zum Zeitpunkt der Übernahme des Werkstückträgers durch die Transportgondel, der Werkstückträger sich in der korrekten Übernahmeposition auf dem Transportband befindet, besteht die Möglichkeit der Anpassung der Geschwindigkeit der Zuführgeschwindigkeit des Werkstückträgers auf dem Transportband, ebenso dadurch, dass der Werkstückträger auf dem Transportband für eine bestimmte Zeitdauer angehalten wird. Wenn das Zugmittel des Transportbandes lediglich über Reibschluss mit dem Werkstückträger in Verbindung steht, kann insofern das Zugmittel mit unverminderter Geschwindigkeit weiterlaufen.

Eine solche Portalfördereinrichtung 10 ist darüber hinaus preiswert herstellbar, da sie aus einfachen Bauteilen hergestellt ist, was ebenfalls einen geringen Wartungsaufwand bedingt.

### Bezugszeichenliste:

- 1: Werkstückförderanlage
- 2: Transportbahn
- 4: Verbindungsbogen
- 10: Portalfördereinrichtung
- 12: Portalschenkel
- 14: Portalsteg
- 16: Zahnrad
- 17: Antriebsmotor
- 18: Rollenkette
- 20: Transportgondel
- 22: Aussparung
- 24: Pendelschenkel
- 26: Aufnahmeschenkel
- 28: Stift
- 30: Achse
- 32: Werkstückträger
- 34: Führungsleiste

## Patentansprüche

1. Fördereinrichtung mit einer Stückgutförderanlage, insbesondere einer Werkstückförderanlage (1),
wobei die Fördereinrichtung zur Bildung eines Durchgangs mindestens eine Portalfördereinrichtung (10) aufweist,
wobei die Portalfördereinrichtung in der Ansicht in etwa U-förmig mit zwei vertikalen Portalschenkeln (12) und einem die Portalschenkel (12) verbindenden Portalsteg (14) ausgebildet ist,
wobei die Stückgutförderanlage zum Transport von Stückgütern ausgebildet ist und auf mindestens einer Transportbahn eine Mehrzahl von Stückgutträgern aufweist, wobei einer Portalfördereinrichtung zu jeder Seite eine Transportbahn zugeordnet ist, wobei auf der Transportbahn die Stückgüter von einer Arbeitsstation zur nächsten Arbeitsstation transportiert werden, wobei die Portalfördereinrichtung (10) ein umlaufendes Transportmittel aufweist, **dadurch gekennzeichnet, dass** das Transportmittel pendelnd daran angeordnete Transportgondeln (20) aufweist, die der Aufnahme von Werkstückträgern im Bereich der Portalschenkel (12) der Portalfördereinrichtung (10) in der Höhe der jeweiligen Transportbahn (2) der Werkstückförderanlage (1) dienen,
wobei die Transportgondel (20) in der Ansicht L-förmig mit einem Pendelschenkel (24) und einem Aufnahmeschenkel (26) ausgebildet ist, wobei der Aufnahmeschenkel (26) Aufnahmemittel, zum Beispiel Stifte (28), zum formschlüssigen Erfassen eines Stückgutträgers aufweist, wobei die Portalschenkel (22) im Bereich der Transportbahn (2) Führungsmittel für die Transportgondel aufweisen.

2. Fördereinrichtung nach Anspruch 1,
**dadurch gekennzeichnet,**
**dass** die Stückgutförderanlage als Horizontalförderanlage ausgebildet ist.

3. Fördereinrichtung nach Anspruch 1 oder 2,
**dadurch gekennzeichnet,**
**dass** die mindestens zwei Transportbahnen (2) im Bereich der Portalschenkel (12) zum Umlauf der Werkstückträger miteinander in Verbindung stehen.

4. Fördereinrichtung nach einem der voranstehenden Ansprüche,
**dadurch gekennzeichnet,**
**dass** das Transportmittel im Bereich des Übergangs von den Portalschenkeln (12) zum Portalsteg (14) durch Umlenkglieder umgelenkt wird.

5. Fördereinrichtung nach einem der voranstehenden Ansprüche,
**dadurch gekennzeichnet,**
**dass** das Transportmittel als Kette, insbesondere als Rollenkette (18) ausgebildet ist.

6. Fördereinrichtung nach einem der Ansprüche 5 oder 6,
**dadurch gekennzeichnet,**
**dass** die Umlenkglieder als Zahnräder (16) ausgebildet sind.

7. Fördereinrichtung nach einem der voranstehenden Ansprüche,
**dadurch gekennzeichnet,**
**dass** die Transportbahn (2) zum Durchlass der Transportgondeln (20) eine entsprechende Aussparung aufweist.

## Claims

1. A conveying device having a unit load conveyor system, in particular a workpiece conveyor system (1),
wherein the conveying device has at least one portal conveying device (10) for forming a passage;
wherein the portal conveying device is configured approximately U-shaped in the view with two vertical portal limbs (12) and one portal web (14) connecting the portal limbs (12); and
wherein the unit load conveyor system is configured for the transport of unit loads and has a plurality of unit load carriers on at least one transport track, with a transport track being associated on each side with a portal conveying device, with the unit loads being transported from one work station to the next work station on the transport track, and with the portal conveying device (10) having a revolving transport means,
**characterized in that**
the transport means has transport cars (20) that are arranged in an oscillating manner thereon and that serve the reception of workpiece carriers in the region of the portal limbs (12) of the portal conveying device (10) at the height of the respective transport track (2) of the workpiece conveyor system (1),
with the transport car (20) being configured as L-shaped in the view with an oscillating limb (24) and a reception limb (26), with the reception limb (26) having reception means, for example pins (28), for a shape-matched gripping of a unit load carrier, and with the portal limbs (12) having guide means for the transport car (20) in the region of the transport track (2).

2. A conveying device in accordance with claim 1,
**characterized in that**
the unit load conveyor system is configured as a horizontal conveyor system.

3. A conveying device in accordance with claim 1 or claim 2,
**characterized in that**
that at least two transport tracks (2) are connected to one another in the region of the portal limbs (12) for the revolution of the workpiece carriers.

4. A conveying device in accordance with one of the preceding claims,
**characterized in that**
the transport means is diverted by diversion members in the region of the transition from the portal limbs (12) to the portal track (14).

5. A conveying device in accordance with one of the preceding claims,
**characterized in that**
the transport means is configured as a chain, in particular as a roller chain (18).

6. A conveying device in accordance with one of the claims 4 or 5,
**characterized in that**
the diversion members are configured as gears (16).

7. A conveying device in accordance with one of the preceding claims,
**characterized in that**
the transport track (2) has a corresponding cutout for the passage of the transport cars (20).

## Revendications

1. Dispositif de transport doté d'une installation de transport de marchandise de détail, en particulier d'une installation de transport de pièces (1),
le dispositif de transport comportant au moins un dispositif de transport à portique (10) pour former un passage, le dispositif de transport à portique étant réalisé, dans la vue de projection, approximativement en forme de U avec deux côtés de portique (12) verticaux et une traverse de portique (14) reliant les côtés de portique (12),
l'installation de transport de marchandise de détail étant conçue pour le transport de marchandises de détail et comportant, sur au moins un chemin de transport, une pluralité de supports de marchandises de détail, un chemin de transport étant associé à chaque côté d'un dispositif de transport à portique, les marchandises de détail étant transportées sur le chemin de transport d'un poste de travail au poste de travail suivant, le dispositif de transport à portique (10) comportant un moyen de transport rotatif, **caractérisé en ce que** le moyen de transport comporte des nacelles de transport (20) disposées suspendues sur celui-ci, lesquelles servent à recevoir des supports de pièce dans la zone des côtés de portique (12) du dispositif de transport à portique (10) à hauteur du chemin de transport (2) respectif de l'installation de transport de pièces (1),
la nacelle de transport (20) étant réalisée, dans la vue de projection, en forme de L avec un côté pendulaire (24) et un côté de réception (26), le côté de réception (26) comportant des moyens de réception, par exemple des tiges (28), pour saisir un support de marchandise de détail par complémentarité de formes, les côtés de portique (12) comportant, dans la zone du chemin de transport (2), des moyens de guidage pour la nacelle de transport.

2. Dispositif de transport selon la revendication 1,
**caractérisé en ce que**
l'installation de transport de marchandise de détail est réalisée sous la forme d'une installation de transport horizontale.

3. Dispositif de transport selon la revendication 1 ou 2,
**caractérisé en ce que**
les au moins deux chemins de transport (2) sont reliés l'un à l'autre dans la zone des côtés de portique (12) pour la circulation des supports de pièce.

4. Dispositif de transport selon l'une des revendications précédentes,
**caractérisé en ce que**
le moyen de transport subit un changement de direction au moyen d'organes de renvoi dans la zone du passage entre les côtés de portique (12) et la traverse de portique (14).

5. Dispositif de transport selon l'une des revendications précédentes,
**caractérisé en ce que**
le moyen de transport est réalisé sous la forme d'une chaîne, en particulier d'une chaîne à rouleaux (18).

6. Dispositif de transport selon l'une des revendications 4 ou 5,
**caractérisé en ce que**
les organes de renvoi sont réalisés sous la forme de roues dentées (16).

7. Dispositif de transport selon l'une des revendications précédentes,
**caractérisé en ce que**
le chemin de transport (2) comporte, pour le passage des nacelles de transport (20), un évidement correspondant.
